Europäisches Patentamt

(19) **European Patent Office**

**Office européen des brevets**

(11) Numéro de publication: **0 103 499**
**A1**

(12) # DEMANDE DE BREVET EUROPEEN

(21) Numéro de dépôt: 83401607.3

(22) Date de dépôt: 03.08.83

(51) Int. Cl.³: **B 23 C 3/35**

(30) Priorité: **12.08.82 FR 8214243**

(43) Date de publication de la demande: **21.03.84**
**Bulletin 84/12**

(84) Etats contractants désignés: **CH DE GB IT LI**

(71) Demandeur: **Société Anonyme H.K. FRANCE,**
**94, Boulevard Richard Lenoir, F-75011 Paris (FR)**

(72) Inventeur: **Kinas, Henry, 22, Boulevard Jean Mermoz,**
**F-92200 Neuilly sur Seine (FR)**

(74) Mandataire: **Boivin, Claude, 9, rue Edouard-Charton,**
**F-78000 Versailles (FR)**

(54) **Dispositif pour la reproduction des clefs codées.**

(57) Le dispositif pour la reproduction des clefs codées est adaptable aux machines à reproduire les clefs par balayage et comporte une fraise rotative et un palpeur 31 pouvant être déplacés simultanément dans deux directions orthogonales.

Ce dispositif comprend un support 1, un premier chariot 3 monté mobile par rapport au support, un deuxième chariot 12 mobile par rapport au premier et portant une barrette 24 munie d'un cran unique 28 dont la forme est celle des crans de la clef à reproduire, les deux chariots étant mobiles respectivement dans la direction longitudinale de la barrette et dans la direction de la profondeur du cran 28 de celle-ci, des moyens pour immobiliser l'un des chariots dans l'une de plusieurs positions repérées correspondant chacune à l'un des emplacements possibles pour les crans de la clef à reproduire, et des moyens pour immobiliser l'autre chariot dans l'une de plusieurs positions repérées correspondant chacune à l'une des profondeurs possibles pour ces crans.

0103499

- 1 -

Dispositif pour la reproduction des clefs codées.

Il existe des machines à reproduire les clefs plates comportant une fraise rotative et un palpeur, ces deux éléments pouvant être déplacés simultanément dans deux directions orthogonales. Souvent ces machines sont utilisées pour reproduire une clef dont on a le modèle et qu'on fixe devant le palpeur. Dans ce cas, on balaie à l'aide du palpeur les crans de la clef modèle; la fraise taille alors dans une ébauche fixée devant elle des crans identiques à ceux de la clef modèle.

Ces machines peuvent également être utilisées pour reproduire une clef dont on connaît simplement le numéro de code. Dans ce cas, jusqu'à présent, on utilise des clefs-mères ou matrices qui comportent des crans écartés les uns des autres d'une distance égale à l'écart que doivent avoir les crans de la clef à réaliser, ces crans ayant tous la même profondeur dans une clef-mère donnée; il existe une clef-mère pour chaque chiffre du code, c'est-à-dire pour chaque profondeur possible pour un cran. On fixe devant le palpeur une clef-mère correspondant au premier chiffre du code et on engage le palpeur dans le premier cran de cette clef-mère de façon à tailler le premier cran dans l'ébauche. Puis on remplace cette clef-mère par une seconde clef-mère correspondant au second chiffre du code et on engage le palpeur dans le second cran de cette clef-mère de façon à tailler un second cran dans l'ébauche. On opère ainsi successivement pour tous les chiffres du code.

Mais ce processus n'est pas satisfaisant. Après taillage de chaque

- 2 -

0103499

cran, il faut repositionner une clef-mère, ce qui est compliqué et une source d'erreur. Par ailleurs, il faut balayer avec le palpeur un cran déterminé de la clef-mère et uniquement ce cran. Cette opération est délicate; si le palpeur dérape, la fraise forme un cran de forme incorrecte et l'ébauche en cours de taillage doit être mise au rebut. On peut remédier à ce dernier inconvénient en prévoyant une clef-mère par profondeur et par emplacement possible de cran. Mais le nombre de clefs-mères est alors considérablement augmenté; la source d'erreurs dûe au repositionnement d'une clef-mère après chaque taillage de cran existe toujours.

Il existe également des machines dans lesquelles on taille une ébauche cran par cran à l'aide d'une fraise à la forme du cran, en déplaçant longitudinalement et transversalement devant la fraise l'ébauche serrée dans un étau. Mais il faut changer de fraise si l'on change de type de clef, ce qui est difficile et délicat. De plus, l'opérateur doit calculer les déplacements de l'étau en fonction du code de la clef, ce qui est une source d'erreurs.

La présente invention a pour objet un dispositif adaptable aux machines à reproduire les clefs par balayage du type ci-dessus et qui permet de reproduire une clef dont on connaît le numéro de code, en évitant les inconvénients signalés précédemment.

Ce dispositif est caractérisé en ce qu'il comporte un support, un premier chariot monté mobile par rapport au support, un deuxième chariot monté mobile par rapport au premier et portant une barrette munie d'un cran unique dont la forme est celle des crans de la clef à reproduire, les deux chariots étant mobiles respectivement dans la direction longitudinale de la barrette et dans la direction de la profondeur du cran de celle-ci, des moyens pour immobiliser l'un des chariots dans l'une de plusieurs positions repérées correspondant chacune à l'un des emplacements possibles pour les crans de la clef à reproduire, et des moyens pour immobiliser l'autre chariot dans l'une de plusieurs positions repérées correspondant chacune à l'une des profondeurs possibles pour ces crans.

Il suffit alors de fixer le dispositif dans la machine à reproduire, à la place de la clef modèle, en regard du palpeur de la machine, de façon que les directions de déplacement des chariots

0103499

soient parallèles aux directions de déplacement de la fraise et du palpeur, et d'amener devant ce palpeur le cran de la barrette placé successivement dans les différents emplacements des crans de la clef à réaliser, en le disposant à chaque fois à la profondeur correspondant au chiffre du code afférant à cet emplacement.

On a décrit ci-après, à titre d'exemple non limitatif, un mode de réalisation du dispositif selon l'invention, avec référence aux dessins annexés dans lesquels :

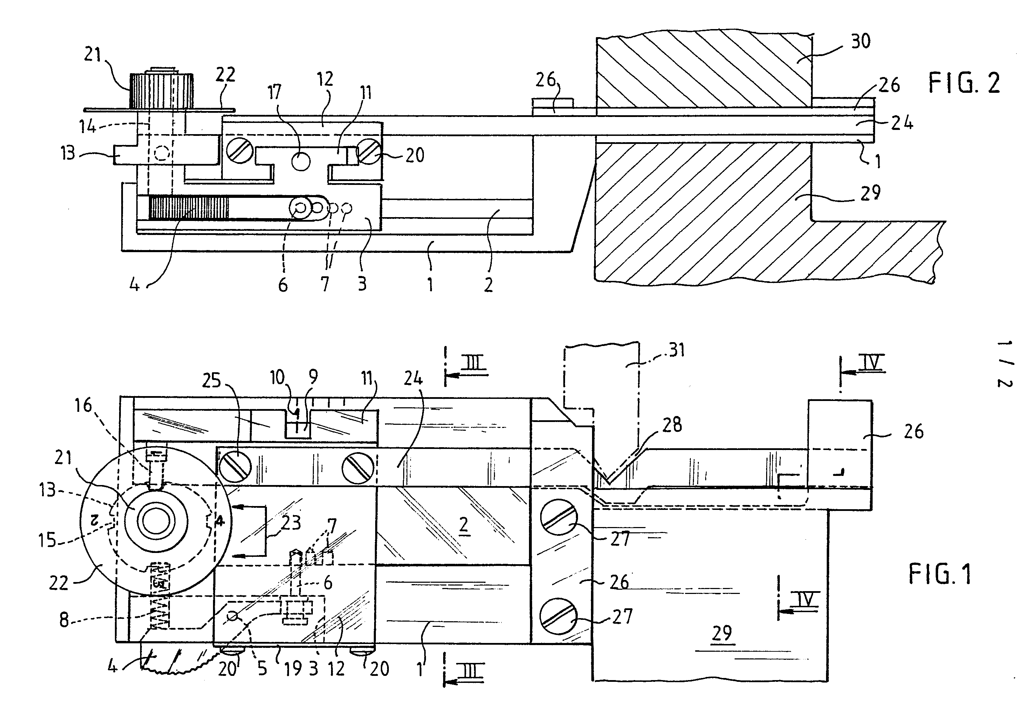

La Figure 1 est une vue en plan du dispositif;

La Figure 2 en est une vue en élévation;

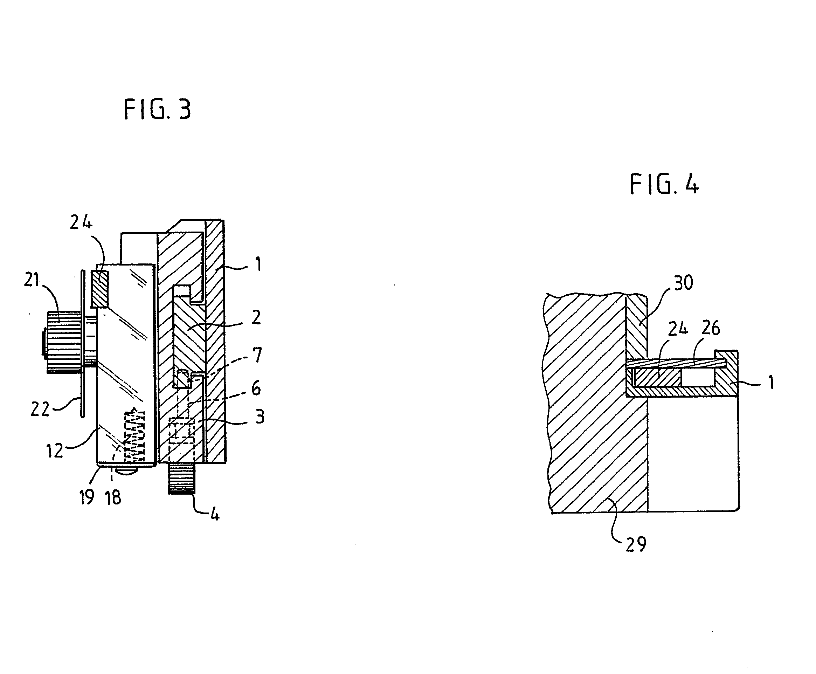

La Figure 3 en est une coupe suivant III-III de la Figure 1;

La Figure 4 en est une coupe suivant IV-IV de la Figure 1.

Tel qu'il est représenté aux dessins, le dispositif selon l'invention comprend un support 1 sur lequel est fixée une glissière longitudinale 2. Un chariot 3 est monté coulissant sur cette glissière. Un levier 4 est monté pivotant en 5 par rapport au chariot 3 et son extrémité en forme de chape maintient une tige 6 dont l'extrémité libre, guidée dans le chariot, peut s'engager dans l'un d'une série de trous 7 prévus dans la glissière 2 et ainsi immobiliser le chariot par rapport au support 1. Un ressort 8 interposé entre le levier et le chariot 3 tend à faire pivoter ce levier dans le sens correspondant à l'engagement de la tige 6 dans l'un des trous 7. Une encoche 9 ménagée dans le chariot et mobile devant une série de graduations 10 permet de repérer le trou 7 dans lequel la tige 6 est engagée, donc la position longitudinale du chariot.

Le chariot 3 est solidaire d'une glissière transversale 11 sur laquelle est monté coulissant un deuxième chariot 12. Une came de réglage 13 est fixée sur un arbre 14 monté pivotant dans le chariot 3. Cette came comporte, à sa périphérie, des crans 15 dans lesquels peut s'engager l'extrémité d'un doigt 16 fixé à la partie arrière du chariot 12 et orienté transversalement. La glissière 11 présente un perçage 17 dans lequel est engagé un ressort 18 maintenu par une plaque 19 qui est fixée par des boulons 20 sur la face avant du chariot 12. Ce ressort tend ainsi à déplacer ce chariot 12 vers l'avant et à appliquer l'extrémité du doigt 16 sur la came 13. L'arbre 14 porte à son extrémité supérieure un bouton de manoeuvre 21 sous lequel est disposé un cadran indicateur 22; ce cadran porte les chiffres "1", "2", "3", etc... correspondant chacun à l'un des crans 15 de la came 13 et est mobile devant un index 23 prévu sur le chariot 12. Lorsqu'on fait pivoter le bouton 21 de façon à amener l'un des chiffres du cadran devant l'index 23, le chariot 12 se déplace transversalement contre l'action du ressort 18.

Une barrette longitudinale 24 est fixée par des vis 25 sur le chariot 12 et est maintenue sur le support 1 par une contre-plaque 26 qui est fixée sur ce support par des vis 27 et sous laquelle la barrette peut se déplacer à la fois longitudinalement et transversalement. Cette barrette fait saillie par rapport au chariot 12 et sa partie en saillie comporte, sur sa tranche arrière, un cran 28 dont la forme est identique à celle des crans de la clef à tailler.

L'ensemble qui vient d'être décrit est destiné à être fixé dans un étau 29-30 d'une machine à reproduire les clefs comportant un palpeur 31 et une fraise à balayage mobile devant un second étau dans lequel peut être fixée une ébauche de clef.

Cet ensemble correspond à un type de clef déterminé. Les différents trous 7 sont écartés les uns des autres d'une distance égale à celle des crans des clefs de ce type. La came 13 est profilée de manière que ses crans 15 correspondent aux diverses profondeurs des crans de la clef.

Dans ces conditions, pour fabriquer une clef comportant par exemple trois crans et ayant pour code X Y Z, on fixe une ébauche dans la machine en regard de la fraise, on amène le chariot 3 dans la position dans laquelle le chiffre "1" apparaît dans l'encoche 9 de ce chariot et on amène devant l'index 23 la graduation "X" du cadran 22. Puis on déplace l'ensemble formé par la fraise et le palpeur 31 de façon que celui-ci balaie le profil du cran 28 de la barrette 24; la fraise taille ainsi dans l'ébauche le premier cran de la clef. On déplace alors le chariot 3 de façon que le chiffre "2" apparaisse dans l'encoche 9 et on amène devant l'index 23 la graduation "Y" du cadran 22. Par balayage du cran 28 par le palpeur, on taille dans l'ébauche le second cran de la clef. Enfin, on déplace le chariot 3 de façon que le chiffre "3" apparaisse dans l'encoche 9, on amène l'index 23 devant la graduation "Z" du cadran, et on taille le troisème cran de la clef.

Le même dispositif peut être utilisé pour tailler des clefs de même type. Si l'on a à tailler des clefs d'un autre type, on remplace l'ensemble par un ensemble analogue dans lequel la forme du cran 28 l'espacement des trous 7, la profondeur des crans 15 de la came 13 et le nombre de ces derniers crans sont adaptés comme indiqué précédemment au nouveau type de clef à reproduire.

Il va de soi que la présente invention ne doit pas être considérée comme limitée au mode de réalisation décrit et représenté, mais en couvre, au contraire, toutes les variantes. C'est ainsi, par exemple, qu'on peut réaliser un dispositif universel sans indexage, la position de chacun des chariots étant déterminée par un capteur associé à un dispositif de commande électronique.

- 1 -

0103499

Revendications.

1. Dispositif pour la reproduction des clefs codées adaptable aux machines à reproduire les clefs par balayage et comportant une fraise rotative et un palpeur pouvant être déplacés simultanément dans deux directions orthogonales, caractérisé en ce qu'il comprend un support 1, un premier chariot 3 monté mobile par rapport au support, un deuxième chariot 12 mobile par rapport au premier et portant une barrette 24 munie d'un cran unique 28 dont la forme est celle des crans de la clef à reproduire, les deux chariots étant mobiles respectivement dans la direction longitudinale de la barrette et dans la direction de la profondeur du cran 28 de celle-ci, des moyens pour immobiliser l'un des chariots dans l'une de plusieurs positions repérées correspondant chacune à l'un des emplacements possibles pour les crans de la clef à reproduire, et des moyens pour immobiliser l'autre chariot dans l'une de plusieurs positions repérées correspondant chacune à l'une des profondeurs possibles pour ces crans.

2. Dispositif selon la revendication 1, caractérisé en ce que les moyens pour immobiliser l'un des chariots comprennent une came de réglage 13 qui est montée pivotante par rapport au support ou à l'autre chariot et sur laquelle est pressé élastiquement un doigt 16 solidaire du premier chariot.

FIG. 2

FIG. 1

1 / 2

0103499

FIG. 4

FIG. 3

**Office européen
des brevets**

# RAPPORT DE RECHERCHE EUROPEENNE

EP  83  40  1607

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-3 919 920   (SCHLAGE) | 1 | B 23 C     3/35 |
| | --- | | |
| A | US-A-2 757 578   (SAUCEDO) | 1 | |
| | --- | | |
| A | US-A-3 469 498   (ADLER) | 1 | |
| | --- | | |
| A | DE-A-2 014 492   (KINAS) | 1 | |
| | --- | | |
| A | US-A-1 889 461   (HANSEN) | 1 | |
| | --- | | |
| A | US-A-3 440 906   (ALLEN) | 1 | |
| | --- | | |
| A | US-A-4 188 163   (JUSKEVIC) | 1 | |
| | --- | | **DOMAINES TECHNIQUES RECHERCHES (Int. Cl. 3)** |
| A | US-A-3 884 121   (AGIUS) | 1 | B 23 C     3/00 |
| | --- | | |
| A | US-A-4 022 107   (FALK) | 1 | |
| | ----- | | |

Le présent rapport de recherche a été établi pour toutes les revendications

| Lieu de la recherche | Date d'achèvement de la recherche | Examinateur |
|---|---|---|
| LA HAYE | 08-12-1983 | HORVATH R.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82